(19) Europäisches Patentamt / European Patent Office / Office européen des brevets

(11) **EP 3 584 610 A1**

(12) **EUROPEAN PATENT APPLICATION**

(43) Date of publication:
**25.12.2019 Bulletin 2019/52**

(51) Int Cl.:
***G02B 3/14*** *(2006.01)*

(21) Application number: **18305770.2**

(22) Date of filing: **19.06.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Essilor International**
**94220 Charenton-le-Pont (FR)**

(72) Inventors:
- **DE SADELEER, Laurent**
  **94220 Charenton-Le-Pont (FR)**
- **PINAULT, Philippe**
  **94220 Charenton-Le-Pont (FR)**
- **BENNER, Nicolas**
  **94220 Charenton-Le-Pont (FR)**
- **BOUTINON, Stéphane**
  **94220 Charenton-Le-Pont (FR)**

(74) Representative: **Jacobacci Coralis Harle**
**32, rue de l'Arcade**
**75008 Paris (FR)**

(54) **TUNABLE OPTICAL SYSTEM AND METHOD FOR DETERMINING THE GEOMETRY OF A COVER GLASS IN SAID TUNABLE OPTICAL SYSTEM**

(57)    The invention relates to a tunable optical system (1) comprising:
- a power-variable lens (10) inserted in an optical barrel (2) extending along an optical axis (3) having a predetermined direction, said power-variable lens having a transparent base plate (11) closing a first end (7) of said optical barrel and a deformable membrane (12) delimiting, with said base plate and said optical barrel, a first chamber (5) filled with a first transparent fluid ($n_1$), wherein the optical power of said power-variable lens is changed according to the deformation of said membrane; and
- a transparent cover glass (20) closing a second end (8) of said optical barrel and delimiting, with said optical barrel and said membrane, a second chamber (6) filled with a second transparent fluid ($n_2$).

According to the invention, the cover glass has a predetermined geometry adapted to compensate for the deformation of the deformable membrane under the action of gravity.

**Fig.1**

EP 3 584 610 A1

**Description**

TECHNICAL FIELD OF THE INVENTION

The invention relates to the domain of liquid lenses in optical systems.

More precisely the invention relates to a tunable optical system comprising a power-variable lens (liquid lens) and a transparent cover glass.

The invention also relates to a phoropter or ophthalmic lens comprising such tunable optical system and to eyeglasses including said ophthalmic lens.

The invention finally proposes a method for determining the geometry of a cover glass in a tunable optical system.

BACKGROUND INFORMATION AND PRIOR ART

A tunable optical system is known from the company Optotune AG, wherein said tunable optical system comprises a power-variable lens (*e.g.* a liquid lens) inserted in an optical barrel extending along an optical axis having a predetermined direction, said power-variable lens having a transparent base plate closing a first end of said optical barrel and a deformable membrane delimiting, with said base plate and said optical barrel, a first chamber filled with a first transparent fluid.

The optical power of the power-variable lens is changed according to the deformation of the deformable membrane, e.g. an elastic polymer membrane, under the action of an actuator, a circular ring, that pulls/pushes onto the center of the membrane so as to modify its shape (concave or convex), in particular its radius of curvature.

The variable optical power of the lens then depends on the shape of the membrane, and on the optical properties (e.g. indices of refraction) of the transparent fluid filling the first chamber.

Hence, depending on the action of gravity, which deforms the optimal shape of the membrane, the optical power of the tunable optical system may be modified with respect to its nominal value (theoretical value *"without"* gravity).

SUMMARY OF THE INVENTION

Therefore one object of the invention is to provide a tunable optical system wherein the influence of the gravity under its optical power is reduced.

A further object of the invention is to provide a tunable optical system wherein the optical aberrations introduced by the deformation of the membrane under the action of gravity are minimized.

The above objects are achieved according to the invention by providing a tunable optical system comprising:

- a power-variable lens inserted in an optical barrel extending along an optical axis having a predetermined direction, said power-variable lens having a transparent base plate closing a first end of said optical barrel and a deformable membrane delimiting, with said base plate and said optical barrel, a first chamber filled with a first transparent fluid, wherein the optical power of said power-variable lens is changed according to the deformation of said membrane; and
- a transparent cover glass closing a second end of said optical barrel and delimiting, with said optical barrel and said membrane, a second chamber filled with a second transparent fluid,

wherein the cover glass has a predetermined geometry adapted to compensate for the deformation of the deformable membrane under the action of gravity.

Hence, it is possible to diminish the impact of the deformation of the membrane of the spherical power of the power-variable lens thanks to the particular shape of the cover glass.

The deformation of the membrane depends on various physical quantities, such as, for example:

- the mechanical properties of the two fluids;
- the (gravity-free) shape of the membrane as a function of the chosen optical (spherical) power of the power-variable lens; and
- the mechanical properties of the membrane: thickness, diameter (aperture), elastic coefficient.

Thanks to the above-mentioned technical feature, the shape of the deformable membrane, which was not a shape of revolution anymore due to the deformation of the deformable membrane under the action of gravity, may be adjusted depending on the predetermined direction of the optical axis of the optical barrel.

Therefore, the optical defaults introduced in the tunable optical system because of the unwanted deformation of the membrane can be suppressed, and the perceived optical power can be modified depending on the field of view through the system.

Other advantageous and non-limiting features of the tunable optical system according to the invention include:

- the predetermined geometry of the cover glass is function of the direction of the optical axis with respect to a vertical direction;
- the deformation of the membrane under the action of gravity introducing optical aberrations in the optical system, the predetermined geometry compensates for the coma aberration in the optical system;
- the coma aberration is compensated for at least one predetermined value of the spherical power of the power-variable lens;
- the coma aberration is set to zero for a value of the spherical power of the power-variable lens of zero diopter;
- said second chamber is filled with air;
- the cover glass being substantially made of a transparent optical plate having two main surfaces, the predetermined geometry of said cover glass comprises an optical shape of at least one of said two main surfaces;
- said at least one surface comprises a layer of resin deposited on the optical plate.

The invention is of particular interest when said tunable optical system is part of a phoropter for determining the refraction correction need of a subject.

Hence, the invention also proposes a phoropter comprising a pair of tunable optical systems as set forth above.

The invention also relates to an ophthalmic lens comprising such a tunable optical system and to eyeglasses comprising such an ophthalmic lens.

The invention finally relates to a method for determining the geometry of a cover glass in a tunable optical system, comprising:

- providing said tunable optical system comprising:

  - a power-variable lens inserted in an optical barrel extending along an optical axis having a predetermined direction, said power-variable lens having a transparent base plate closing a first end of said optical barrel and a deformable membrane delimiting, with said base plate and said optical barrel, a first chamber filled with a first transparent fluid, wherein the optical power of said power-variable lens is changed according to the deformation of said membrane; and
  - said transparent cover glass closing a second end of said optical barrel and delimiting, with said optical barrel and said membrane, a second chamber filled with a second transparent fluid;

- orienting the optical axis of the optical system in a particular direction with respect to a vertical direction;
- setting a predetermined value for a spherical power of the power-variable lens,
- evaluating the mechanical deformation of the deformable membrane under the action of gravity,
- determining the geometry of the cover glass so as to compensate for the evaluated deformation of the deformable membrane.

In a preferred embodiment, the step of evaluating the mechanical deformation of the deformable membrane comprises the sub-steps of:

- measuring, for a set of given directions of the optical axis, values of the coma in the tunable optical system;
- deducing, from said values of the coma, the elastic tension coefficient T of the membrane; and
- evaluating said deformation based on said elastic tension coefficient T for said particular direction.

In another preferred embodiment, the step of determining the geometry of the cover glass comprises the sub-steps of:

- simulating the optical aberrations in the tunable optical system due to the deformation of the membrane under the action of gravity; and
- minimizing, for said particular direction of the optical axis, the coma aberration in the optical system.

Preferably, the sub-step of minimizing the coma is performed for a spherical power of the power-variable lens set to zero diopter. In a variant, the sub-step of minimizing the coma is performed for two symmetric values (e.g. $-D_0$ and $+D_0$ diopters) of the spherical power $D_{sph}$.

Advantageously, the method according to the invention further comprises:

- selecting a particular population of people;

- estimating the mean value of the spherical refraction of the selected population of people,

the spherical power of the power-variable lens being set to said mean value of the spherical refraction.

DETAILED DESCRIPTION OF EXAMPLE

The following description, enriched with joint drawings that should be taken as non limitative examples, will help understand the invention and figure out how it can be realized.

On joint drawings:

- figure 1 is a schematic cross-sectional view of a tunable optical system according to an embodiment of the invention showing a power-variable lens and a transparent cover glass;
- figure 2 is a cross-sectional view of the power-variable lens of figure 1 showing how the membrane is deformed under the action of gravity;
- figure 3 is a perspective view of the power-variable lens of figure 2;
- figure 4 is a 3D graph showing the shape of the front surface of the cover glass of figure 1; and
- figures 5 and 6 are curves showing the compensation of the coma aberration with the cover glass of figure 1.

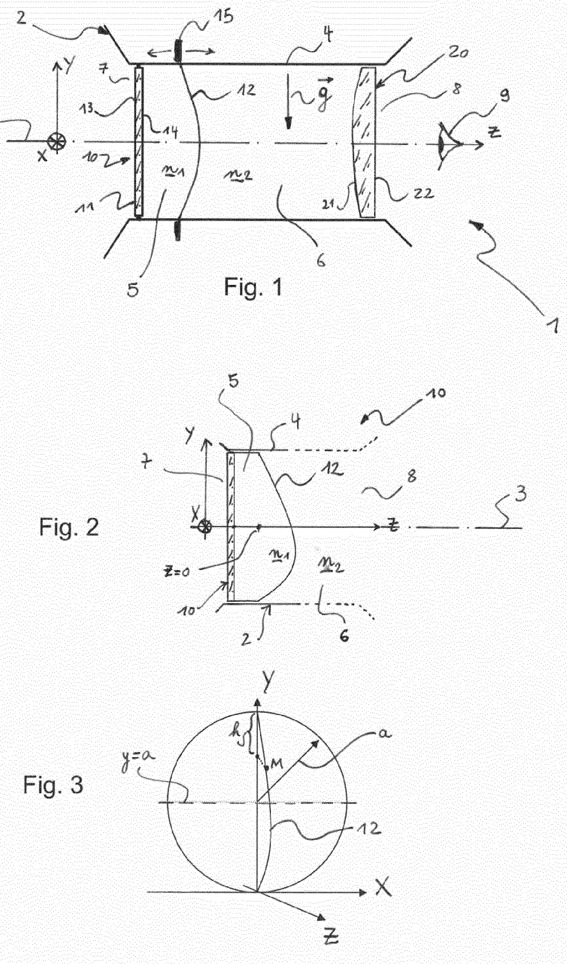

We represent on figure 1 an example of a tunable optical system 1 according to an embodiment of the invention.

This optical system 1 may be part of an ophthalmic lens, said ophthalmic lens being in turn part of an eyeglass.

In other applications, one can consider providing a phoropter for determining the refraction correction need of a subject, said phoropter comprising two of this kind of tunable optical system.

The tunable optical system 1 comprises an optical barrel 2, a power-variable lens 10 and a transparent cover glass 20.

The optical barrel 2 is here cylindrical in shape and extends along an optical axis 3 having a predetermined direction Z. The Z direction is here horizontal, that is perpendicular to the Y direction, this vertical direction being here the direction of gravity (see descending arrow ↓ and vector g in figure 1).

In another configurations, the predetermined direction Z may be in any direction with respect to the direction of gravity. The direction of the optical axis can go for example from horizontal to vertical.

Preferably, the tunable optical system 1 is configured to be used with an optical axis 3 which forms an angle with the vertical direction larger than 60° (hence smaller than 30° with respect to the horizontal direction).

The barrel 2 has a cylindrical lateral wall 4 between a first end 7 close to the power-variable lens 10 and a second end 8 close to the cover glass 20.

As shown in more detail in figure 2, the power-variable lens 10 is inserted in the optical barrel 2 of the tunable optical system 1 and comprises:

- a transparent base plate 11 closing a first end 7 of said optical barrel 2; and
- a deformable membrane 12 delimiting, with the base plate 11 and the optical barrel 2, a first chamber 5 filled with a first transparent fluid, here denoted by its refractive optical index $n_1$.

The base plate 11 may be made out of mineral glass, such as e.g. Schott BK7 or preferably out of organic glass.

The base plate 11 is preferably a plate transparent in the visible domain (e.g. 400-700 nm) and has two plane and parallel faces 13, 14.

In a variant, one or both faces 13, 14 may be shaped to improve the optical quality of the lens 10, and hence of the optical system 1. For example, the front face 13 may be aspherical to correct the spherical aberration of the lens 10.

In another variant, one or both faces 13, 14 may comprise a functional or optical coating, such as, *e.g.,* an anti-reflective coating.

In the present embodiment, the first fluid $n_1$ is here a gel of silicone, which has a refractive index $n_1 = 1.38$ (at a wavelength of 546 nm; attenuation negligible).

The deformable membrane 12 is here made of a thin elastic polymer membrane.

The membrane 12 is functionally and tightly attached to the lateral wall 4 of the optical barrel 2 by means of an annular ring 15 which can slide back and forth along the external surface of the barrel 2 (see left and right arrows).

Along with the base plate 11 and the first fluid $n_1$, the membrane 12 forms the tunable lens 10 of the system 1.

Indeed, the movement of the ring 15 along the optical barrel 2 causes the deflection of the membrane 12 so that its shape is modified, and hence the optical power may be changed through the control of the ring 15 according to the deformation of said membrane 12.

As represented on figure 1, the cover glass 20 closes the second end 8 of the optical barrel 2 and delimits, with the optical barrel 2 and the membrane 12, a second chamber 6 filled with a second transparent fluid, denoted here by its refractive optical index $n_2$.

In the present embodiment, the second fluid $n_2$ is air at normal pressure and temperature conditions (*i.e.* 293 K, 1 atm), which has a refractive index $n_2$ = 1.00 (at a wavelength of 589 nm; attenuation negligible).

In alternative embodiments, the second fluid may be a transparent liquid or gel.

In operation, the first and second fluids $n_1$, $n_2$ of the tunable optical system 1 are in equilibrium and subject to the action of gravity. Therefore, as the membrane 12 is deformable, the action of gravity has an influence on the deformation of the membrane 12. In other words, the shape of the membrane 12 depends not only from the position of the annular ring 15, but also from the angle between the optical axis 3 and the direction (here vertical) of the gravity.

Without gravity (unreal case), the shape of the deformable membrane 12 should be perfectly symmetric around the optical axis 3 (of revolution) of the system 1 because usually the action of the annular ring 15 on the membrane 12 is symmetric. With gravity (actual case, see fig. 2), the membrane 12 is deformed under its own weight in such way that its shape around the optical axis 3 of the system 1 is not symmetric anymore.

For example, and as it is represented on figures 2 and 3 in an exaggerated way, when the optical axis 3 is horizontal, the membrane 12 is slightly thicker in the bottom part (towards Y < 0, in the same direction as gravity) of the lens 10.

The only case where the deformation of the membrane 12 is symmetric is when the optical axis 3 of the system 1 is vertical, that is collinear to the direction of gravity.

According to the invention, in order to compensate for the deformation of the deformable membrane 12 under the action of gravity, the cover glass 20 of the optical system 1 has a predetermined geometry.

Indeed, the deformation of the membrane 12 under the action of gravity introduces optical aberrations in the tunable system 1, such as coma, astigmatism, tilt or defocus for example, depending on the real shape of the membrane 12 around the optical axis 3.

Hence, in the present invention, *"compensating for the deformation of the membrane 12"* means reducing or canceling the detrimental optical effects caused by the imperfect shape of the membrane 12 due to gravity.

Advantageously, the predetermined geometry of the cover glass 20 is function of the direction of the optical axis 3 with respect to the direction of gravity, because the actual shape of the membrane 12 depends on the direction of the optical axis 3.

Knowing the orientation, that is the angle between the optical axis 3 and the direction of gravity, and knowing the mechanical properties of the membrane 12 allows calculating the actual shape of the membrane 12 taking into account the deformation due to gravity.

If we consider a point M(x,y,Z) of the membrane 12 (see fig. 3), one can write the equilibrium of the forces (*"pump pressure"*, gravity and elastic tension of the membrane 12) like:

$$T\frac{\partial^2 Z}{\partial y^2} + [P] = 0$$

where:

- Z(x,y) is the coordinate of point M(x,y) of the membrane 12;
- T is the elastic tension of the membrane (in N.m$^{-1}$);
- [P] is the over-pressure induced by the gravity force (in Pa or N.m$^{-2}$);

According to fundamental theorem of hydrostatics, in a fluid of constant volume mass at equilibrium, the difference of pressures between two points is equal to the weight of the column of fluid having for cross-section the unity surface and for height the difference of levels between the two points. Hence, the pressure at a point in the fluid at a depth h is given by: $P = P_0 + \rho g h$, h being (see fig. 3) the depth in the fluid and where:

- h = 2a - y, 2a being the diameter (in m) of the lens 10 aperture;
- $P_0$ is the pressure (in Pa) in the first chamber (first fluid);
- $\rho$ is the density of the first fluid $n_1$ in kg.m$^{-3}$; and
- g = 9.81 m.s$^{-2}$ is the constant of gravity.

Therefore, one can write:

$$T\frac{\partial^2 Z}{\partial y^2} + [w + \rho g(2a - y)] = 0$$

where w is the liquid pressure (in Pa) in the first fluid.

Solving this differential equation leads to the equation (3) of the shape of the membrane 12:

$$Z(x, y) = -\frac{\rho g a}{T} \cdot (y^2 - \frac{y^3}{6a}) - \frac{w}{2T} y^2 + C_1 y + C_2$$

where C1, C2 are functions of x only.

Writing that Z(x,y) = 0 (see fig. 2) for $x^2 + (y-a)^2 = a^2$ (points at the edge of the membrane 12), one can deduce, after long calculations, the C1 and C2 functions as:

$$C_1 = \frac{\rho g}{6T} \cdot \left(x^2 + 8a^2\right) + \frac{w}{2T} 2a$$

and

$$C_2 = -\frac{\rho g}{6T} 4ax^2 - \frac{w}{2T} x^2 .$$

Injecting C1 and C2 in equation (3) and re-working the terms leads finally to the (implicit) equation (4) of the surface of the membrane 12:

$$Z(x, y) = -\frac{\rho g a}{T} \cdot \left[\frac{y}{6a} - \frac{2}{3} - k\right]\left(2ay - y^2 - x^2\right)$$

where k = w/(2*ρ*g*a).

The equation (4) thus gives the deformation Z(x,y) of the deformable membrane 12 compared with the theoretical surface that the surface of the membrane 12 would assume if there were no gravity.

In the present embodiment, the lens 10 has an aperture of 2a = 20 mm and the first fluid $n_1$ has a density $\rho = 2.2 \times 10^3$ kg.m$^{-3}$. Moreover, the pressure difference w between the second chamber 6 (low pressure) and the first chamber 5 (high pressure) is equal to w= -142 N.m$^{-2}$.

Hence, one finds that the elastic tension coefficient k (adimensional quantity) is here equal to -0.329.

At this stage, the only remaining variable in the equation (4) is the elastic tension coefficient T of the deformable membrane 12.

To evaluate precisely the mechanical deformation of the deformable membrane 12, one can preferably measure for a set of given orientations of the optical axis 3, the values of the coma aberration in the tunable optical system 1, and deduce therefrom the elastic tension coefficient T of the membrane 12.

In practice, one performs numerical optical simulations in order to calculate, from the equation of the deformed surface (see equation 4 above), the values of the coma aberration. By varying the coefficient T, one searches the value of T for which the coma aberration is the closest to the true value of the coma measured previously.

Then, the deformation of the membrane 12 is evaluated (*i.e.* the equation of the membrane surface), for the particular direction of the optical axis 3, based on said elastic tension coefficient T.

In an example embodiment of the tunable optical system 1 of fig. 1, the elastic tension coefficient T of the membrane 12 has been deduced to have a value of 70.4 N.m$^{-1}$.

Once we have deduce the elastic tension coefficient T of the deformable membrane 12, we determine - for at least one value of the spherical power of the power-variable lens 10 (said value setting the *"nominal"* shape of the membrane 12) - the actual shape of the membrane 12 deformed, with respect to this nominal shape, under the action of gravity.

Then, we determine the geometry of the cover glass 20 so as to compensate for the evaluated deformation of the deformable membrane 12.

In practice, the deformation of the membrane 12 due to gravity is very small, 40 microns on average and 50 microns at maximum and the cover glass 20, as represented on fig. 1, is substantially made of a transparent optical plate having two main surfaces, a front surface 21 and a rear surface 22.

The cover glass is made out of mineral or organic glass, for example Schott N-BK7 or CDGM H-K9L, and preferably has a thickness lower than 2.5 millimeters.

In order to compensate the deformation of the membrane 12, the predetermined geometry of the cover glass 20 comprises an optical shape of at least one of its two main surfaces 21, 22. In other words, the front surface 21 and the rear surface 22 are basically plane and parallel surfaces but at least one, here the front surface 21, is slightly modified so as to correct the optical aberrations introduced by the slightly deformed surface of the membrane 12.

In a preferred embodiment, the predetermined geometry of the cover glass 20 compensates for the coma aberration in the optical system 1.

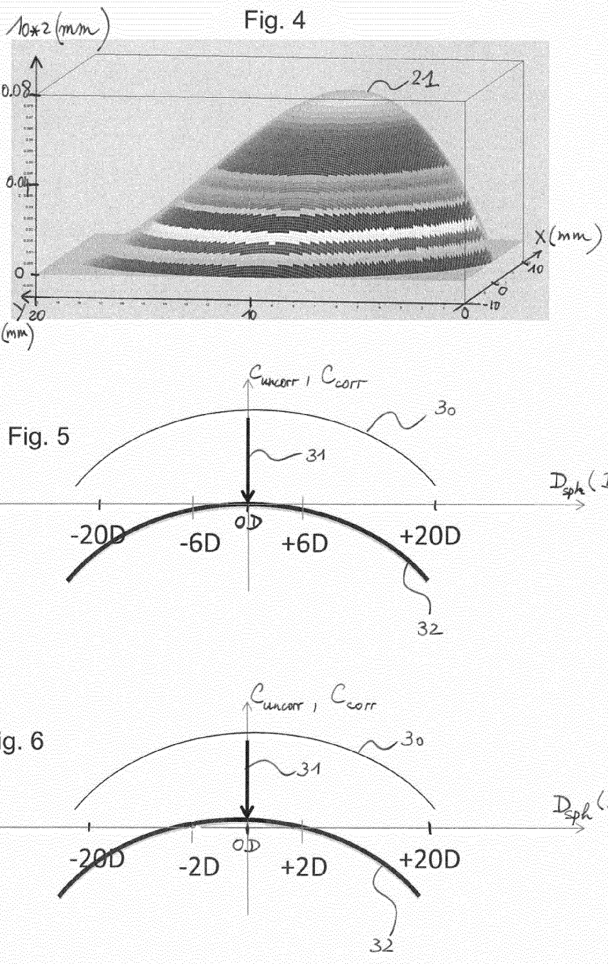

For example, figure 4 represents the three-dimensional optical shape of the front surface 21 of the cover glass 20 for an optical system 1 having a horizontal optical axis 3 (perpendicular to the direction of gravity, case of fig. 1), wherein the power-variable lens 10 is set with a nominal spherical power $D_{sph}$ equal to zero diopter (0 D), meaning that the nominal shape of the membrane is plane and parallel to the base plate 11.

As we may see from figure 4, as compared to a plane surface, the front surface 21 of the cover glass 20 is very smooth, the maximum deformation of this surface 21 being here less than 80 microns.

Advantageously, the front surface 21 is formed by depositing a layer of resin (*replica* resin), on a plane surface of the cover glass 20.

With a front surface 21 of the cover glass 20 having the geometry represented on figure 4, the coma aberration is compensated for a spherical power $D_{sph}$ of the lens 10 of zero diopter.

This is shown on figure 5, where we represented the coma aberration as a function of the spherical power $D_{sph}$ (*i.e.* the power controlled by the action of the ring 15 on the membrane 12) of the lens 10. Curve 30 represents the uncorrected coma aberration coefficient $C_{uncorr}$ (in wavelengths), *i.e.* the case when no compensation cover glass is used; and curve 32 represents the corrected coma aberration coefficient $C_{corr}$ (in wavelengths) when a cover glass 20 having a front surface 21 such as the one of figure 4. Between the two curves 30, 32, is the value 31 of compensation calculated for a zero value ($D_{sph} = 0$ D) of the spherical power of the power-variable lens 10.

In a preferred embodiment, the step of determining the geometry of the cover glass 20 (e.g. the optical shape of the front surface 21) comprises:

- simulating the optical aberrations in the tunable optical system 1 due to the deformation of the membrane 12 under the action of gravity; and
- minimizing, for the particular direction of the optical axis 3, the coma aberration in the optical system 1.

In practice, the optimization (minimizing sub-step) can be easily performed by optical design, where one:

- simulates optically the optical system 1 with the deformed membrane 12 and the cover glass 20 having a optically shaped front surface 21 (which is a parameter in the optimization); and
- evaluates the values of the optical aberrations (which is the function of merit of the optimization), e.g. of the coma aberration coefficient $C_{corr}$, for the optically shaped front surface 21.

In another preferred embodiment, the coma aberration is compensated for at least one predetermined value of the spherical power $D_{sph}$ of the power-variable lens 10.

This is shown in the example of figure 6, where we have represented the uncorrected and the corrected coma aberration coefficients $C_{uncorr}$, $C_{corr}$ (in wavelengths), as a function of the spherical power $D_{sph}$ of the power-variable lens 10. Here, the optimization of the predetermined geometry of the cover glass 20 has been done on the optical shape of the front surface 21, so as to compensate the deformation of the membrane 12 for a value $D_{sph} = +/- 2$D for the spherical power of the lens 10. This optimization allows having small values of coma aberration $C_{corr}$ on an more extended range of spherical power of the lens 10 (and hence for a larger population of subjects).

**Claims**

1. Tunable optical system (1) comprising:

   - a power-variable lens (10) inserted in an optical barrel (2) extending along an optical axis (3) having a predetermined direction, said power-variable lens (10) having a transparent base plate (11) closing a first end (7) of said optical barrel (2) and a deformable membrane (12) delimiting, with said base plate (11) and said optical barrel (2), a first chamber (5) filled with a first transparent fluid ($n_1$), wherein the optical power of said power-variable lens (10) is changed according to the deformation of said membrane (12); and

- a transparent cover glass (20) closing a second end (8) of said optical barrel (2) and delimiting, with said optical barrel (2) and said membrane (12), a second chamber (6) filled with a second transparent fluid ($n_2$),

**characterized in that** the cover glass (20) has a predetermined geometry adapted to compensate for the deformation of the deformable membrane (12) under the action of gravity.

2. Tunable optical system (1) according to claim 1, wherein the predetermined geometry of the cover glass (20) is function of the direction of the optical axis (3) with respect to a vertical direction.

3. Tunable optical system (1) according to claim 1 or 2, wherein, the deformation of the membrane (12) under the action of gravity introducing optical aberrations in the optical system (1), the predetermined geometry compensates for the coma aberration ($C_{corr}$) in the optical system (1).

4. Tunable optical system (1) according to claim 3, wherein the coma aberration ($C_{corr}$) is compensated for at least one predetermined value of the spherical power ($D_{sph}$) of the power-variable lens (10).

5. Tunable optical system (1) according to claim 3, wherein the coma aberration ($C_{corr}$) is set to zero for a value of the spherical power ($D_{sph}$) of the power-variable lens (10) of zero diopter.

6. Tunable optical system (1) according to anyone of claims 1 to 5, wherein said second chamber (6) is filled with air.

7. Tunable optical system (1) according to anyone of claims 1 to 6, wherein, the cover glass (20) being substantially made of a transparent optical plate having two main surfaces (21, 22), the predetermined geometry of said cover glass (20) comprises an optical shape of at least one of said two main surfaces (21, 22).

8. Tunable optical system (1) according to claim 7, wherein the at least one surface (21) comprises a layer of resin deposited on the optical plate.

9. Phoropter for determining the refraction correction need of a subject, comprising a pair of tunable optical systems according to anyone of claims 1 to 8.

10. Ophthalmic lens comprising a tunable optical system according to anyone of claims 1 to 8.

11. Eyeglasses comprising an ophthalmic lens according to claim 10.

12. Method for determining the geometry of a cover glass (20) in a tunable optical system (1), comprising:

- providing said tunable optical system (1) comprising:

- a power-variable lens (10) inserted in an optical barrel (2) extending along an optical axis (3) having a predetermined direction, said power-variable lens (10) having a transparent base plate (11) closing a first end (7) of said optical barrel (2) and a deformable membrane (12) delimiting, with said base plate (11) and said optical barrel (2), a first chamber filled with a first transparent fluid ($n_1$), wherein the optical power of said power-variable lens (10) is changed according to the deformation of said membrane (12); and
- said transparent cover glass (20) closing a second end (8) of said optical barrel (2) and delimiting, with said optical barrel (2) and said membrane (12), a second chamber filled with a second transparent fluid ($n_2$);

- orienting the optical axis (3) of the optical system (1) in a particular direction with respect to a vertical direction;
- setting a predetermined value for a spherical power ($D_{sph}$) of the power-variable lens (10),
- evaluating the mechanical deformation of the deformable membrane (12) under the action of gravity,
- determining the geometry of the cover glass (20) so as to compensate for the evaluated deformation of the deformable membrane (12).

13. Method according to claim 12, wherein the step of evaluating the mechanical deformation of the deformable membrane (12) comprises:

- measuring, for a set of given directions of the optical axis (3), values of the coma in the tunable optical system (1);
- deducing, from said values of the coma, the elastic tension coefficient (T) of the membrane (12);

- evaluating said deformation based on said elastic tension coefficient (T) for said particular direction.

14. Method according to claim 12 or 13, wherein the step of determining the geometry of the cover glass (20) comprises:

- simulating the optical aberrations in the tunable optical system (1) due to the deformation of the membrane (12) under the action of gravity; and
- minimizing, for said particular direction of the optical axis (3), the coma aberration ($C_{corr}$) in the optical system (1).

15. Method according to claim 14, wherein the sub-step of minimizing the coma is performed for a spherical power ($D_{sph}$) of the power-variable lens (10) set to zero diopter.

Fig. 1

Fig. 2

Fig. 3

Fig. 4

Fig. 5

ig. 6

Europäisches
Patentamt

European
Patent Office

Office européen
des brevets

# EUROPEAN SEARCH REPORT

Application Number

EP 18 30 5770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | WO 2018/028847 A1 (OPTOTUNE AG [CH])<br>15 February 2018 (2018-02-15)<br>* page 15, paragraph 2 - page 16, paragraph 1 *<br>* page 18, paragraph 4 *<br>* figures 1, 2 * | 1-8, 10-15<br>9 | INV.<br>G02B3/14 |
| Y | WO 2008/007077 A1 (SILVER JOSHUA DAVID [GB]; ROBERTSON ANDREW [GB]; NEWBERY MIRANDA [GB]) 17 January 2008 (2008-01-17)<br>* page 4; figure 1 * | 1-15 | |
| Y | "Speckle reduction device and compact, portable phoropter module",<br>IP.COM JOURNAL, IP.COM INC., WEST HENRIETTA, NY, US,<br>30 April 2014 (2014-04-30), XP013162737,<br>ISSN: 1533-0001<br>* page 51 - page 60 * | 1-15 | |
| Y | JP 2012 018216 A (CANON KK)<br>26 January 2012 (2012-01-26)<br>* paragraph [0010] - paragraph [0035]; figures 1-8 * | 1-15 | TECHNICAL FIELDS SEARCHED (IPC)<br><br>G02B<br>G02C |
| Y<br>A | WO 2012/055049 A1 (OPTOTUNE AG [CH]; KERN THOMAS [CH]) 3 May 2012 (2012-05-03)<br>* page 4, line 31 - page 8, line 26 *<br>* page 13, lines 5-14 *<br>* figure 1 * | 1-5,7-9, 12-15<br>6,10,11 | |
| A | JP 2012 108428 A (CANON KK)<br>7 June 2012 (2012-06-07)<br>* paragraph [0013] - paragraph [0020]; figure 1 * | 1-15 | |

The present search report has been drawn up for all claims

| Place of search | Date of completion of the search | Examiner |
|---|---|---|
| Munich | 16 November 2018 | Zwerger, Markus |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 30 5770

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2018

| Patent document cited in search report | Publication date | Patent family member(s) | | Publication date |
|---|---|---|---|---|
| WO 2018028847 A1 | 15-02-2018 | NONE | | |
| WO 2008007077 A1 | 17-01-2008 | AU | 2007274060 A1 | 17-01-2008 |
| | | BR | PI0714240 A2 | 12-03-2013 |
| | | CA | 2657354 A1 | 17-01-2008 |
| | | CN | 101506714 A | 12-08-2009 |
| | | EP | 2038691 A1 | 25-03-2009 |
| | | JP | 2009543148 A | 03-12-2009 |
| | | KR | 20090058498 A | 09-06-2009 |
| | | RU | 2009103211 A | 20-08-2010 |
| | | US | 2010053543 A1 | 04-03-2010 |
| | | WO | 2008007077 A1 | 17-01-2008 |
| JP 2012018216 A | 26-01-2012 | NONE | | |
| WO 2012055049 A1 | 03-05-2012 | CN | 103180762 A | 26-06-2013 |
| | | EP | 2633341 A1 | 04-09-2013 |
| | | JP | 2014500522 A | 09-01-2014 |
| | | KR | 20130139952 A | 23-12-2013 |
| | | US | 2013265647 A1 | 10-10-2013 |
| | | WO | 2012055049 A1 | 03-05-2012 |
| JP 2012108428 A | 07-06-2012 | NONE | | |

EPO FORM P0459

For more details about this annex : see Official Journal of the European Patent Office, No. 12/82